# EUROPEAN PATENT APPLICATION

(11) **EP 4 787 930 A1**
(43) Date of publication of application: **05.08.2026**
(21) Application number: 25223995.9
(22) Date of filing: 16.12.2025
(51) Int. Cl.: H04W 24/02, H04W 36/00

(54) **JOINT MANAGEMENT OF OVERLAPPING WIRELESS NETWORKS**

(30) Priority: 31.01.2025 US 202519042741
(71) Applicant: Juniper Networks, Inc., Sunnyvale, CA 94089-1206 (US)
(72) Inventor: OKTAY, Oguz, Sunnyvale, 94089 (US); NESTEROFF, Lyubov, Sunnyvale, 94089 (US); KUMAR, Vijai, Sunnyvale, 94089 (US); CHOI, Jung Shik, Sunnyvale, 94089 (US); CHOH, Edward Wai Hong, Sunnyvale, 94089 (US); GUPTA, Ojas, Sunnyvale, 94089 (US); ZHAO, Mingjie, Sunnyvale, 94089 (US)
(74) Representative: D Young & Co LLP

(57) **Abstract**

This disclosure describes techniques for managing multiple wireless networks providing overlapping coverage to user devices. In one example, this disclosure describes a computing system configured to collect network data associated with a first wireless network; collect network data associated with a second wireless network, wherein the first wireless network and the second wireless network have an overlapping coverage area, and wherein the first wireless network and the second wireless network are different wireless network types; identify, based on the network data associated with the first wireless network, a user device that is attached to the first wireless network and is in the overlapping coverage area, wherein the user device is also capable of attaching to the second wireless network; and predict, based on both the network data associated with the first wireless network and the network data associated with the second wireless network, a network condition impacting the user device.

## Description

This application claims the benefit of U.S. Patent Application No. 19/042,741, filed January 31, 2025, the entire contents of which application is incorporated herein by reference.

### TECHNICAL FIELD

The disclosure relates to computing networking and, more specifically, to management of wireless networks.

### BACKGROUND

Computer networks have become ubiquitous, and the number of network applications, network-connected devices, and types of network-connected devices are rapidly expanding. Private cellular networks, such as a private 5G network, can be used by organizations that need secure, high-performance, low-latency networks customized for mission-critical applications. Such private cellular networks may support industries that include manufacturing, healthcare, and automation, where real-time data processing and scalability are key. Local wireless networks, such as Wi-Fi, offer cost-effective, user-friendly wireless connectivity with fast speeds, broad compatibility, and scalability. Such local wireless networks tend to work well for indoor environments and IoT devices.

### SUMMARY

Particular aspects are set out in the appended independent claims. Various optional embodiments are set out in the dependent claims. This disclosure describes techniques for managing multiple wireless networks that provide overlapping coverage to user devices. Techniques described herein involve collecting performance metrics, key performance indicators, and other information from multiple different types of networks (e.g., a cellular mobile network and a Wi-Fi network). A management system uses the collected information to perform joint management operations for the networks and/or for the user devices that attach to any of the networks.

In some examples, artificial intelligence or machine learning models are trained to identify various conditions across multiple wireless networks, such as network congestion associated with one or more of the networks, data usage anomalies, user device attachment anomalies, and/or other conditions. Such models may be based on historical information collected from the networks being monitored or from other networks. A joint management system may apply the models to operating wireless networks to identify a network condition, such as congestion or anomalous activity, and propose an action to remedy the network condition. Such actions may be performed automatically or after authorization by an administrator. By leveraging insights gained from metrics collected across multiple wireless networks, the joint management system may more effectively manage a collection of networks than systems that separately manage multiple networks.

In some examples, this disclosure describes operations performed by a computing system in accordance with one or more aspects of this disclosure. In one specific example, this disclosure describes a method comprising collecting, by a computing system, network data associated with a first wireless network; collecting, by the computing system, network data associated with a second wireless network, wherein the first wireless network and the second wireless network have an overlapping coverage area, and wherein the first wireless network and the second wireless network are different wireless network types; identifying, by the computing system and based on the network data associated with the first wireless network, a user device that is attached to the first wireless network and is in the overlapping coverage area, wherein the user device is also capable of attaching to the second wireless network; predicting, by the computing system and based on both the network data associated with the first wireless network and the network data associated with the second wireless network, a network condition impacting the user device; and performing, by the computing system and based on the predicted network condition impacting the user device, an action to remediate the network condition impacting the user device.

In another example, this disclosure describes a system comprising a storage system and processing circuitry having access to the storage system, wherein the processing circuitry is configured to collect network data associated with a first wireless network; collect network data associated with a second wireless network, wherein the first wireless network and the second wireless network have an overlapping coverage area, and wherein the first wireless network and the second wireless network are different wireless network types; identify, based on the network data associated with the first wireless network, a user device that is attached to the first wireless network and is in the overlapping coverage area, wherein the user device is also capable of attaching to the second wireless network; predict, based on both the network data associated with the first wireless network and the network data associated with the second wireless network, a network condition impacting the user device; and perform, based on the predicted network condition impacting the user device, an action to remediate the network condition impacting the user device.

In yet another example, this disclosure describes a computer-readable storage medium comprising instructions that, when executed, configure processing circuitry of a computing system to collect network data associated with a first wireless network; collect network data associated with a second wireless network, wherein the first wireless network and the second wireless network have an overlapping coverage area, and wherein the first wireless network and the second wireless network are different wireless network types; identify, based on the network data associated with the first wireless network, a user device that is attached to the first wireless network and is in the overlapping coverage area, wherein the user device is also capable of attaching to the second wireless network; predict, based on both the network data associated with the first wireless network and the network data associated with the second wireless network, a network condition impacting the user device; and perform, based on the predicted network condition impacting the user device, an action to remediate the network condition impacting the user device.

This Summary is intended to provide a brief overview of some of the subject matter described in this document. Accordingly, the above-described features are merely examples and should not be construed to narrow the scope of this disclosure. Other features, objects, and advantages of the disclosure will be apparent from the description and drawings, and from the claims.

### BRIEF DESCRIPTION OF THE DRAWINGS

FIG. 1 is a conceptual diagram illustrating an example network system for managing multiple wireless networks providing overlapping coverage to wireless devices, in accordance with one or more techniques of the disclosure.
FIG. 2 is a conceptual diagram that includes a block diagram of a computing system configured to manage multiple wireless networks providing overlapping coverage to wireless devices, in accordance with one or more techniques of the disclosure.
FIG. 3A, FIG. 3B, FIG. 3C, FIG. 3D, and FIG. 3E are conceptual diagrams illustrating example user interfaces presented by a user interface device, in accordance with one or more aspects of the present disclosure.
FIG. 4A and FIG. 4B are conceptual diagrams illustrating additional example user interfaces presented by a user interface device, in accordance with one or more aspects of the present disclosure.
FIG. 5 is a flow diagram illustrating operations performed by an example joint operations manager, in accordance with one or more aspects of the present disclosure.

Although each of the above-described Figures are referenced herein in connection with the description of one or more specific examples, such examples are merely illustrative, and each illustration can be used to provide support for other examples not specifically described herein. Accordingly, the examples described herein with reference to any of the above-described Figures should not be construed to narrow the scope of the subject matter illustrated or otherwise disclosed herein.

### DETAILED DESCRIPTION

Wi-Fi networks are ubiquitous in the enterprise environments, providing wireless coverage to user equipment and devices. Private cellular networks (e.g., 5G and/or xG networks) can also be deployed in the same enterprise environment, providing overlapping wireless coverage to the same or similar set of wireless devices. However, private cellular networks tend to be managed by separate management components that may conflict with tools for managing Wi-Fi networks. This disclosure describes techniques for managing multiple wireless networks, including private cellular networks and Wi-Fi networks, jointly and in coordination.

Managing and monitoring both private cellular networks and Wi-Fi networks, where those networks serve many devices, is increasingly complex. Managing and monitoring challenges arise in root-cause analysis (RCA), which is a critical aspect of troubleshooting private mobile networks and Wi-Fi. Network engineers must hypothesize, test, and confirm the nature of issues before they can resolve them. However, tools that tend to overwhelm users with many alerts and other information, without clearly identifying the problem, may require network engineers and support teams to manually perform complex calculations to resolve issues.

At least some of the techniques described herein address these challenges by utilizing artificial intelligence techniques and machine learning algorithms to provide unified network monitoring across both private cellular networks (e.g., private 5G) and local wireless networks (e.g., Wi-Fi).

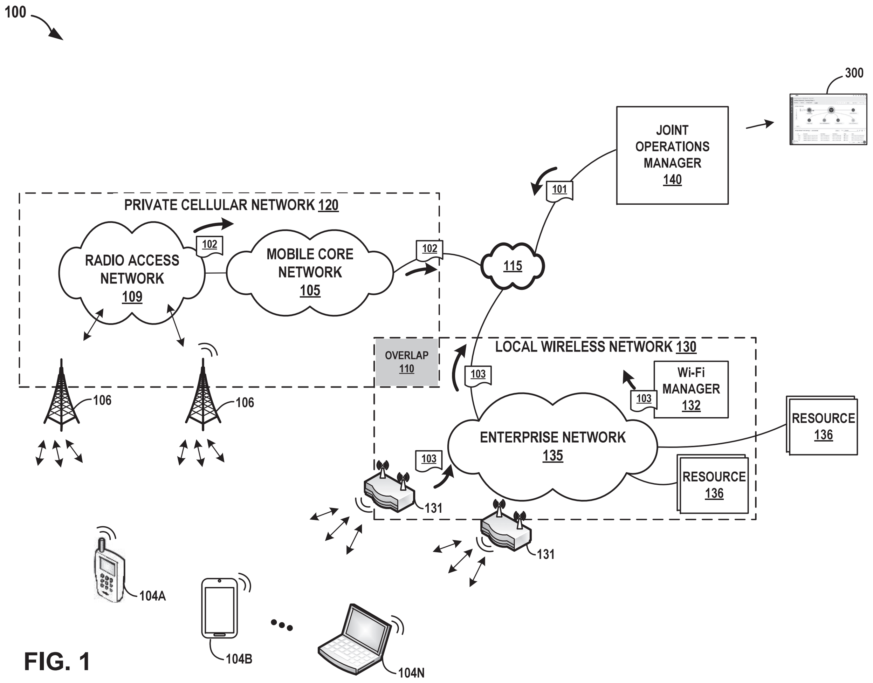

FIG. 1 is a conceptual diagram illustrating an example network system 100 in which multiple wireless networks providing overlapping coverage to wireless devices are managed, in accordance with one or more techniques of the disclosure. Techniques described herein are primarily applicable to environments having two or more wireless networks, particularly where those networks are of different types, such as in environments where both a 5G cellular mobile network and a Wi-Fi network provide overlapping wireless coverage to the same geographical area.

In the example of FIG. 1, cellular network 120 is a cellular mobile network, such as a 5G or xG mobile network that provides wireless connectivity to any number of user devices 104A through 104N ("user devices 104" or "user equipment 104"). Cellular network 120 includes radio access network 109 and mobile core network 105. In FIG. 1, cellular network 120 may encompass a coverage area defined by the range of one or more base stations 106. Cellular network 120 is primarily described herein as a private cellular network operated by an organization for the benefit of its employees, users, or affiliates, although techniques described herein may be applicable to cellular networks in other contexts.

Local wireless network 130 is also a wireless network providing wireless connectivity to user devices 104, such as a network conforming to one or more of the IEEE 802.11 standards (i.e., "Wi-Fi"). As a Wi-Fi network, local wireless network 130 is typically characterized by one or more access points 131 that, in at least some implementations, may encompass a smaller geographical area than that encompassed by base stations of a cellular network. Local wireless network 130 is primarily described herein as a Wi-Fi network, but local wireless network 130 could also be another type of wireless network, such as a network based on Bluetooth / Bluetooth Low Energy (BLE) protocols, mesh networking protocols such as ZigBee, or other wireless networking technologies. Further, although primarily described herein as a "local" wireless network, the service area of local wireless network 130 need not be strictly "local," and instead such a service area might be very large, and in some cases, may exceed that of cellular network 120 and/or the footprint of typical a Wi-Fi network.

User devices 104 may represent smartphones, desktop computers, laptop computers, tablets, smart watches, and/or "Internet-of-Things" (IOT) devices, such as cameras, sensors, televisions, appliances, or the like. Some of user devices 104 may only have cellular network communication capabilities, enabling such user devices 104 to be capable of attaching to and/or communicating with cellular network 120, but not local wireless network 130. Other user devices 104 may only have wireless network or Wi-Fi communication capabilities, enabling such user devices 104 to be capable of attaching to and/or communicating with local wireless network 130, but not cellular network 120. In many cases, however, user devices 104 may have both cellular network communication capabilities and wireless network communication capabilities, enabling such user devices 104 to be able to attach to and communicate using either cellular network 120 or local wireless network 130.

Accordingly, cellular network 120 and local wireless network 130 each may provide one or more of user devices 104A through 104N with access to one or more applications or services provided by network 115. Network 115 may represent, for example, one or more service provider networks and services, the Internet, another private network, a network providing access to third party services, one or more IP-VPNs, an IP-multimedia subsystem, a combination thereof, or any other network or combination of networks.

Cellular network 120 includes one or more radio access networks 109 and one or more mobile core networks 105. Radio access network 109 provides network access, data transport, and other services to user devices 104. In some examples, radio access network (or "RAN") 109 may be an Open Radio Access Network (O-RAN), a 5G mobile network RAN, a 4G LTE mobile network RAN, another type of RAN, or a combination of these. For example, in a 5G-radio access network, each radio access network 109 comprises a plurality of cell sites (or simply "cells") that each include radio equipment, such as base stations 106, also known as gNodeBs, to exchange packetized data within a data network to ultimately access one or more applications or services provided by data network 115.

Each of base stations 106 may be divided into three functional components: radio unit (RU), distributed unit (DU), and central unit (CU), which can be deployed in various configurations. RU manages the radio frequency layer and has antenna arrays of various sizes and shapes. DU performs lower layer protocol processing. CU performs the upper layer protocol processing. Depending on operator and service requirements, base stations 106 can be deployed monolithically, e.g., RU, DU, and CU reside within a cell site, or these functionalities can be distributed across cell sites while the CU resides in an edge cloud site controlling a plurality of distributed DUs. O-RAN is, for example, an approach to networking in which disaggregated functions can be used to deploy mobile fronthaul and midhaul networks. The disaggregated functions can be cloud-based functions.

Mobile core network 105 may be a 5G core network, and network 115 may represent, for example, one or more service provider networks and services, the Internet, third party services, one or more IP-VPNs, an IP-multimedia subsystem, a combination thereof, or other network or combination of networks. In some examples, resources associated with the service provided by a mobile network operator to the tenant may be provided by, or managed by, functions of mobile core network 105 and/or components of radio access network 109. Mobile core network 105 may implement various discrete control plane and user plane functions for network system 100. Further details about such control plane and user plane functions can be found in U.S. Patent Application No. 18/620,733, filed March 28, 2024 (entitled "Service Management And Orchestration For Private And Public Mobile Networks") (Attorney Ref. 2014-676US01), which is hereby incorporated by reference.

Local wireless network 130 is illustrated in FIG. 1 as a Wi-Fi network that includes Wi-Fi manager 132 and one or more access points 131. Wi-Fi manager 132 may perform operations relating to management of local wireless network 130, including coordination of access points 131 and other hardware of local wireless network 130. In some examples, some or all of the functions performed by Wi-Fi manager 132 may be performed by one or more of access points 131. Each of access points 131 may be a commercial or enterprise access point, a router, or any other device capable of providing wireless network access. Access points 131 enable user devices 104 to wirelessly connect to local wireless network 130 using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies.

Local wireless network 130 may also encompass an organizational or enterprise network 135, which may include physical systems that occupy some of the same physical space or site over which local wireless network 130 is available. Enterprise network 135 may include systems and other network resources 136 that provide services for use by the organization or enterprise or that otherwise further the mission of that organization or enterprise (e.g., a hospital, airport, hotel, stadium, retail outlet, business, or the like). As indicated by FIG. 1, one or more network resources 136 may include systems physically present on the site served by local wireless network 130 (i.e., included within local wireless network 130) and one or more of the network resources 136 associated with enterprise network 135 may be external to local wireless network 130, as illustrated by FIG. 1 (e.g., accessible remotely over another network). In some examples, particularly when cellular network 120 is a private mobile cellular network, cellular network 120 may also encompass enterprise network 135, and provide access to such network resources 136 of enterprise network 135.

Techniques described herein are applicable to management of networks, such as cellular network 120 and local wireless network 130, where those networks provide at least some degree of overlapping wireless coverage (e.g., signified by overlapping wireless coverage 110 in FIG. 1). For ease of illustration, the overlapping wireless coverage 110 indicated in FIG. 1 suggests a partial overlap of cellular network 120 and local wireless network 130. However, it should be understood that such overlap may be, in many examples, much more significant. For example, the wireless coverage provided by one network (e.g., cellular network 120) may completely encompass the wireless coverage provided by the other network (e.g., local wireless network 130), or vice-versa.

Joint operations manager 140 is a system that manages cellular network 120 and local wireless network 130. Joint operations manager 140 may be implemented through any suitable computing system, including one or more server computers, workstations, appliances, cloud computing systems, mainframes, and/or other computing devices that may be capable of performing operations and/or functions described in accordance with one or more aspects of the present disclosure. In other examples, such computing systems may represent or be implemented through one or more virtualized compute instances (e.g., virtual machines, containers) of a data center, cloud computing system, server farm, and/or server cluster.

Although joint operations manager 140 is illustrated in FIG. 1 being logically or physically separate from cellular network 120 and local wireless network 130 (and in communication through network 115), joint operations manager 140 may, in other examples, be part of cellular network 120 or local wireless network 130. Joint operations manager 140 may also, in other examples, access and/or interact with cellular network 120 and/or local wireless network 130 (or resources on those networks) in another way not specifically illustrated in FIG. 1.

In operation, and in accordance with one or more aspects of the present disclosure, joint operations manager 140 may collect information about cellular network 120 and local wireless network 130. For instance, in an example that can be described in the context of FIG. 1, joint operations manager 140 outputs a series of signals over network 115. Elements within both cellular network 120 and local wireless network 130 detect at least some of the signals and determine that the signals include requests 101 seeking information about the operation of each respective network. Cellular network 120 and/or devices and elements associated with cellular network 120 (e.g., radio access network 109 and/or mobile core network 105) respond to the requests 101 by outputting network data 102 over network 115 to joint operations manager 140. Similarly, local wireless network 130 and/or devices and elements associated with local wireless network 130 (e.g., access point 131 and/or Wi-Fi manager 132) respond to the request 101 by outputting network data 103 over network 115 to joint operations manager 140. Joint operations manager 140 receives both network data 102 and network data 103 and determines the data includes (or uses the data to derive) various performance metrics, key performance indicators, and other information about operations of both cellular network 120 and local wireless network 130.

Although in FIG. 1 network data 102 and network data 103 are described as being sent to joint operations manager 140 in response to requests 101 initiated by joint operations manager 140, in other examples, network data 102 and 103 may be sent to joint operations manager 140 without first receiving a specific request 101. For example, radio access network 109, mobile core network 105, and/or elements or element management systems of cellular network 120 may occasionally, periodically, or continually send at least some network data 102 to joint operations manager 140, without first receiving a request 101 for such data. Also, one or more of access points 131 may occasionally, periodically, or continually send at least some network data 103 to joint operations manager 140, without first receiving a request 101 for such data. Similarly, other elements of local wireless network 130, including Wi-Fi manager 132 or network resources 136, may occasionally, periodically, or continually send at least some network data 103 to joint operations manager 140, without first receiving a request 101 for such data.

Joint operations manager 140 may predict network congestion affecting one or more of user devices 104. For instance, still referring to the example being described in the context of FIG. 1, joint operations manager 140 evaluates network data 102 and 103 and determines that while cellular network 120 is not congested, local wireless network 130 is or is expected to be congested. To make this determination, joint operations manager 140 may apply one or more machine learning models trained to identify actual or expected network congestion. Such models may have been trained using data similar to network data 102 and 103, so when joint operations manager 140 applies the models to network data 102 and 103, the models can generate appropriate predictions about network congestion. In some examples, joint operations manager 140 may report the congestion associated with local wireless network 130 by generating one or more user interfaces 300 for presentation at a computing device operated by an administrator (not shown in FIG. 1).

Joint operations manager 140 may perform operations to resolve or remediate network congestion associated with local wireless network 130. For instance, again with reference to FIG. 1, joint operations manager 140 evaluates options for resolving congestion in local wireless network 130, including moving some of user devices 104 from local wireless network 130 to cellular network 120. Joint operations manager 140 identifies one or more user devices 104 that are connected to (or attached to) local wireless network 130, but that are also capable of attaching to cellular network 120. Joint operations manager 140 selects one or more of such user devices 104 and causes them to be detached from local wireless network 130, and enables those same user devices 104 to then be attached to cellular network 120. By moving one or more user devices 104 from local wireless network 130 to cellular network 120, joint operations manager 140 may resolve the congestion associated with local wireless network 130.

Techniques described herein may provide certain technical advantages. For example, by jointly managing multiple wireless networks, it is possible to leverage insights gained from metrics and other information collected across those multiple wireless networks, which may be more effective than separately managing a collection of networks. Further, by jointly managing multiple wireless networks, it is also possible to monitor the total quality of experience about an individual device which roams between multiple networks. (e.g. aggregated data usage over cellular and local networks). Also, some of the techniques described herein address challenges to managing both private cellular and Wi-Fi networks by utilizing artificial intelligence techniques and machine learning algorithms to provide unified network monitoring across both types of networks. By enabling timely or near-real-time insights into network performance, automating root cause analyses, and suggesting corrective actions, issues can be resolved more quickly.

Also, rather than overwhelming network administrators or users with vast arrays of data, techniques described and illustrated herein are effective in highlighting root causes and recommending or performing specific actions to optimize the network. These techniques not only reduce the complexity of managing large-scale enterprise networks, but also minimize downtime and enhance operational efficiency in the relevant environments and contexts, empowering an organization's information technology staff to focus on more strategic tasks.

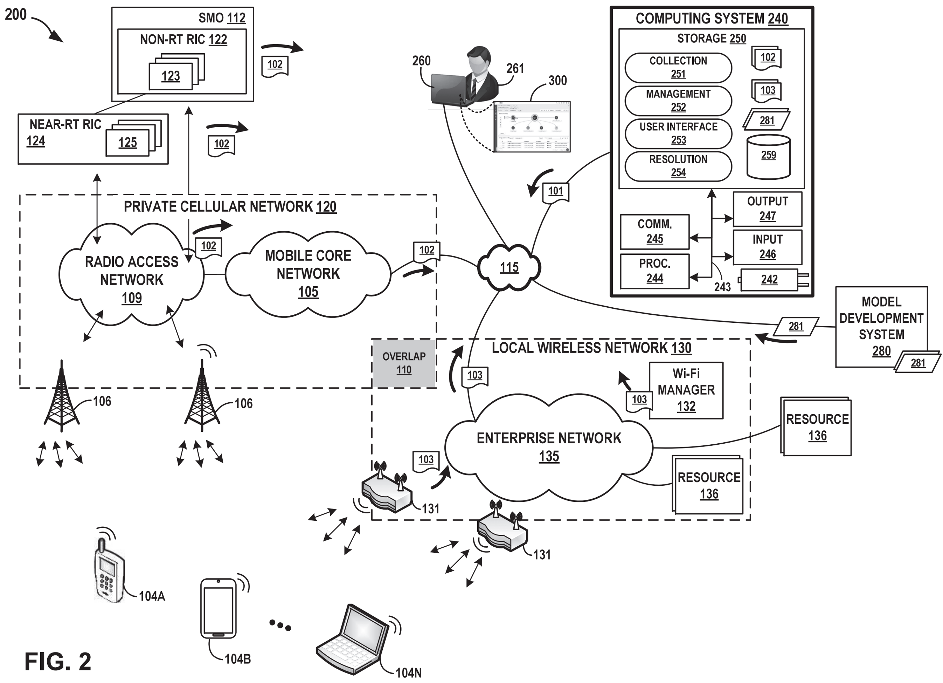

FIG. 2 is a conceptual diagram that includes a block diagram of a computing system configured to enable management of multiple wireless networks providing overlapping coverage to wireless devices, in accordance with one or more techniques of the disclosure. System 200 of FIG. 2 includes many of the same elements of system 100 described in connection with FIG. 1. Elements illustrated in FIG. 2 may correspond to earlier-described elements sharing the same reference numeral.

FIG. 2 also illustrates service and management orchestrator 112 ("SMO 112"), which includes a RAN intelligent controller ("RIC") to manage aspects of radio access network 109 and/or mobile core network 105. In the example illustrated in FIG. 2, the RIC included within service and management orchestrator 112 is a non-real time RAN intelligent controller 122. A near-real-time RIC 124 is also shown in FIG. 2.

In general, a network system, such as network system 100, may include a service management and orchestration framework (e.g., implemented by service and management orchestrator 112) offering various framework functions along with a non-real-time RIC (e.g., non-real-time RIC 122), configured in accordance with Open Radio Access Network (O-RAN) standards ("O-RAN architecture"), to manage and/or monitor aspects of a RAN and/or 5G core. The O-RAN architecture may include non-real-time RIC 122 and near-real-time RIC 124; each executes different functions and services for RAN functions. A non-real-time RIC is an orchestration and automation function configured to provide radio resource management, higher layer procedure optimization, policy optimization, and provide guidance, parameters, policies and artificial intelligence (AI) and machine learning (ML) models to support the operation of near-real-time RIC functions in the RAN. The non-real-time RIC may onboard one or more applications (e.g., rApps) that provide non-real time (e.g., greater than one second) control of RAN elements and their resources, and the near-real-time RIC may onboard one or more applications (e.g., xApps) that provide near-real time control of RAN elements and their resources.

In some examples, service and management orchestrator 112, non-real-time RIC 122, and near-real-time RIC 124 may be operated by the mobile network operator providing 5G services to a tenant. Service and management orchestrator 112 can orchestrate and control management and automation aspects of radio access network 109 and collection of performance metrics and/or key performance indicators (generally, network data 102). Further, service and management orchestrator 112 may control aspects of non-real-time RIC 122 and near-real-time RIC 124. Non-real-time RIC 122 can provide non-real-time (e.g., greater than one second) control, optimization, and/or data reporting for RAN elements and resources such as RUs, DUs, and CUs, workflow management, and policy-based control of applications and features of near-real-time RIC 124. Near-real-time RIC 124 can provide near-real-time (e.g., milliseconds) control, optimization, and/or data reporting for RAN elements and resources via fine-grained data collection and actions. Both non-real-time RIC 122 and near-real-time RIC 124 may be deployed using a microservices based containerized architecture. In some examples, near-real-time RIC 124 may be located within an edge or regional cloud.

Non-real-time RIC 122 may onboard one or more applications, e.g., applications 123 (e.g., rApps of FIG. 1) that manage non-real time events within non-real-time RIC 122, such as applications that do not require response times of less than one second. Applications 123 may leverage the functionality exposed via the non-real-time RIC framework of non-real-time RIC 122. Applications 123 may be used to collect network data 102 and/or to control and manage RAN elements and resources, such as near-real-time RIC 124, RAN nodes, and/or resources in the O-RAN cloud. Applications 123 may also utilize network data 102 and subscriber data (i.e., performance metrics and key performance indicators) to provide recommendations for network optimization and operational guidance (e.g., policies) to one or more applications of near-real-time RIC 124. Although illustrated as within non-real-time RIC 122, any one or more of applications 123 may be executed by a third party, separate from non-real-time RIC 122.

Near-real-time RIC 124 may provide near-real-time (e.g., milliseconds) control and optimization of RAN elements and resources, via fine-grained data collection and actions performed via an E2 interface. For example, near-real-time RIC 124 may onboard one or more applications 125 that provide near-real time control of RAN elements and their resources.

Service and management orchestrator 112, non-real-time RIC 122, and near-real-time RIC 124 are illustrated in FIG. 2 as being outside of cellular network 120. In other examples, one or more of such systems may be logically or physically within cellular network 120 or another network. Other arrangements of service and management orchestrator 112, non-real-time RIC 122. and near-real-time RIC 124 are also possible. For example, both non-real-time RIC 122 and near-real-time RIC 124 may be part of service and management orchestrator 112, or in another example, both non-real-time RIC 122 and near-real-time RIC 124 might be implemented (e.g., logically or physically) separately from service and management orchestrator 112.

Further details about the O-RAN architecture may be found in U.S. Patent Application No. 18/620,733, filed March 28, 2024 (entitled "Service Management And Orchestration For Private And Public Mobile Networks") (Attorney Ref. 2014-676US01), which is hereby incorporated by reference, which is hereby incorporated by reference.

Also illustrated in FIG. 2 is a block diagram of computing system 240, which may be considered an example or alternative implementation of joint operations manager 140 of FIG. 1. Computing system 240 of FIG. 2 may operate in a manner similar to joint operations manager 140 illustrated in FIG. 1. For example, computing system 240 may jointly manage cellular network 120 and local wireless network 130 as described in connection with FIG. 1. Computing system 240 is illustrated in FIG. 2 to facilitate a description of certain components, modules, and other aspects of a computing system that may implement a system for joint management of both a cellular network and a Wi-Fi network, such as joint operations manager 140. Computing system 240 is also illustrated in FIG. 2 to facilitate a description of how such a computing system may operate in accordance with techniques described herein.

For ease of illustration, computing system 240 is depicted in FIG. 2 as a single computing system. However, in other examples, computing system 240 may be implemented through multiple devices or computing systems distributed across a data center, multiple data centers, multiple cloud networks, or otherwise. For example, separate computing systems may implement functionality described herein as being performed by each of various modules of computing system 240, including collection module 251, management module 252, user interface module 253, and resolution module 254. Alternatively, or in addition, modules illustrated in FIG. 2 as included within computing system 240 may be implemented through distributed virtualized compute instances (e.g., virtual machines, containers) of a data center, cloud computing system, server farm, and/or server cluster.

In FIG. 2, computing system 240 is shown with underlying physical hardware that includes power source 242, one or more processors 244, one or more communication units 245, one or more input devices 246, one or more output devices 247, and one or more storage devices 250. One or more of the devices, modules, storage areas, or other components of computing system 240 may be interconnected to enable inter-component communications (physically, communicatively, and/or operatively). In some examples, such connectivity may be provided by through communication channels, which may include a system bus (e.g., communication channel 243), a network connection, an inter-process communication data structure, or any other method for communicating data. Although computing system 240 of FIG. 2 may be considered an example implementation of joint operations manager 140 of FIG. 1, other implementations are possible.

In the example shown, power source 242 of computing system 240 may provide power to one or more components of computing system 240. Power source 242 may receive power from an alternating current (AC) power supply in a building, data center, or other location. In some examples, power source 242 may be or include a battery or a device that supplies direct current (DC). Power source 242 may have intelligent power management or consumption capabilities, and such features may be controlled, accessed, or adjusted by processors 244 to intelligently consume, allocate, supply, or otherwise manage power. Storage devices 250 may include collection module 251, management module 252, user interface module 253, resolution module 254, one or more models 281, and data store 259.

One or more processors 244 of computing system 240 may implement functionality and/or execute instructions associated with computing system 240 or associated with one or more modules illustrated herein and/or described herein. One or more processors 244 may be, may be part of, and/or may include processing circuitry that performs operations in accordance with one or more aspects of the present disclosure. Such processors may be mobile processors, desktop processors, server processors, compute nodes, virtualized processors, neural processing units or NPUs, graphics processing units or GPUs, and/or other types of processors or processing circuitry. Processors 244 may execute the instructions of one or more processes executing on computing system 240 and may implement functionality of such processes.

One or more communication units 245 of computing system 240 may communicate with devices external to computing system 240 by transmitting and/or receiving data, and may operate, in some respects, as both an input device and an output device. Communication units 245 may enable computing system 240 to communicate with other computing devices and systems using any appropriate communication protocol (e.g., TCP/IP) and over any appropriate medium. In some or all cases, one or more communication units 245 may communicate with other devices or computing systems over a network. For example, communication units 245 may enable computing system 240 to communicate with any other device or system illustrated in FIG. 2, such as cellular network 120, local wireless network 130, and/or devices included on those networks.

One or more input devices 246 may represent any input devices of computing system 240, and one or more output devices 247 may represent any output devices of computing system 240. Input devices 246 and/or output devices 247 may generate, receive, and/or process output from any type of device capable of outputting information to a human or machine. For example, one or more input devices 246 may generate, receive, and/or process input in the form of electrical, physical, audio, image, and/or visual input (e.g., peripheral device, keyboard, microphone, camera). Correspondingly, one or more output devices 247 may generate, receive, and/or process output in the form of electrical and/or physical output (e.g., peripheral device, actuator).

One or more storage devices 250 within computing system 240 may store information for processing during operation of computing system 240. Storage devices 250 may store program instructions and/or data associated with one or more of the modules described in accordance with one or more aspects of this disclosure. One or more processors 244 and one or more storage devices 250 may provide an operating environment or platform for such modules, which may be implemented as software, but may in some examples include any combination of hardware, firmware, and software. One or more processors 244 may execute instructions and one or more storage devices 250 may store instructions and/or data of one or more modules. The combination of processors 244 and storage devices 250 may retrieve, store, and/or execute the instructions and/or data of one or more applications, modules, or software. Processors 244 and/or storage devices 250 may also be operably coupled to one or more other software and/or hardware components, including, but not limited to, one or more of the components of computing system 240 and/or one or more devices or systems illustrated or described as being connected to computing system 240.

Collection module 251 may perform functions relating to collecting network data 102 from cellular network 120 and network data 103 from local wireless network 130. In general, collection module 251 may perform some of the collection functions described herein as being performed by joint operations manager 140 of FIG. 1.

Management module 252 may perform functions relating to jointly managing cellular network 120 and local wireless network 130, including detecting and handling congestion on cellular network 120 and/or local wireless network 130, and detecting and handling anomalous conditions associated user devices 104 attached to either cellular network 120 or local wireless network 130. In general, management module 252 may perform some of the detection and congestion handling functions performed by joint operations manager 140 of FIG. 1, anomaly detection and handling functions, and other functions.

User interface module 253 may perform functions relating to generating user interfaces that present information about the joint management of cellular network 120 and local wireless network 130. User interfaces may be presented at administrator device 260, for review by an administrator 261. As further described herein, such user interfaces may highlight or report congestion, anomalies, and other conditions. User interfaces may propose or report on actions associated with such reported conditions.

Resolution module 254 may perform functions to remediate any conditions identified by management module 252. Resolution module 254 may output control signals over a network (e.g., network 115) that have the effect of changing the operation of network hardware associated with cellular network 120, local wireless network 130, and/or one or more user devices 104, and thereby remediating the identified condition. Such actions may be performed automatically by computing system 240 in some cases, or in other cases, such actions may be first proposed to an administrator and then performed based on input from the administrator.

Internal data store 259 of computing system 240 may represent any suitable data structure or storage medium for storing information relating to network data 102 associated with cellular network 120, network data 103 associated with local wireless network 130, information used to train or apply models 281, information used to generate user interfaces, and/or other information. The information stored in internal data store 259 may be searchable and/or categorized such that one or more modules within computing system 240 may provide an input requesting information from internal data store 259, and in response to the input, receive information stored within internal data store 259. Internal data store 259 may be primarily maintained by management module 252.

Model development system 280 is a system for training and/or developing models, such as artificial intelligence or machine learning models. Model development system 280 may be implemented separately from computing system 240, and may provide off-site or cloud-based services for training of models 281. Model development system 280 may access historical or other data in order to train models 281 that are used in production by computing system 240. In some examples, model development system 280 may receive data from computing system 240 or another source that can be used as the basis for training data.

Model development system 280 may be implemented by any suitable computing system, which may include one or more server computers, workstations, appliances, cloud computing systems, mainframes, and/or other computing devices. Such computing systems may represent or be implemented through one or more virtualized compute instances (e.g., virtual machines, containers) of a data center, cloud computing system, server farm, and/or server cluster. Also, although illustrated as being implemented separately from computing system 240, model development system 280 may, in some examples, be part of computing system 240 (i.e., logically or physically part of computing system 240).

In operation, and in accordance with one or more aspects of the present disclosure, computing system 240 may collect metrics and events associated with cellular network 120. For instance, in an example that can be described in the context of FIG. 2, collection module 251 of computing system 240 causes communication unit 245 to output one or more signals over network 115. One or more elements of cellular network 120 receive a signal and determine that the signal corresponds to one or more requests 101 seeking information about performance metrics and/or key performance indicators associated with cellular network 120.

For example, service and management orchestrator 112 may receive one or more requests 101 and respond by sending metrics, in the form of network data 102, over network 115. Communication unit 245 of computing system 240 detects a responsive signal over network 115 and outputs information about the responsive signal to collection module 251. Collection module 251 determines that the responsive signal corresponds to network data 102 from service and management orchestrator 112. Collection module 251 stores network data 102 from service and management orchestrator 112 within data store 259.

Alternatively, or in addition, non-real-time RIC 122 and/or near-real-time RIC 124 may receive a request 101 and respond by sending network data 102 (e.g., metrics collected by RIC 122 or 124) over network 115. In such an example, collection module 251 of computing system 240 receives the network data 102 and determines that the network data 102 corresponds to network data 102 collected by non-real-time RIC 122 and/or near-real-time RIC 124. Collection module 251 stores network data 102 from non-real-time RIC 122 and/or near-real-time RIC 124 within data store 259.

Alternatively, or in addition, radio access network 109 and/or mobile core network 105 may receive requests 101 and respond by sending network data 102 (e.g., metrics collected within cellular network 120). In such an example, collection module 251 receives the network data 102 and determines that the network data 102 corresponds to network data 102 collected by radio access network 109 and/or mobile core network 105. Collection module 251 stores network data 102 collected by radio access network 109 and/or mobile core network 105 within data store 259.

Alternatively, or in addition, various other elements of cellular network 120 or element management systems that manage aspects of cellular network 120 may receive requests 101 and respond by sending network data 102. In such examples, collection module 251 receives the sent network data 102 and determines that the network data 102 corresponds to network data 102 collected by other elements of cellular network 120 or element management systems of cellular network 120. Collection module 251 stores network data 102 collected by cellular network 120 or the element management systems within data store 259.

In some examples, network data 102 may include telemetry data and/or performance metrics and/or key performance indicators pertaining to cellular network 120. Network data 102 may, for example, include sequential metrics such as aggregated transmission or reception of the flow of information per radio cell (or base station 106), the transmission or reception of data per user device 104, information about physical resource block (PRB) allocation and utilization of a radio cell, the number of attached user devices 104 for a cell, the total number of active user devices 104, alarms generated by radio access network 109 and/or mobile core network 105, logs associated with events within cellular network 120 or otherwise, and/or other information and metrics. Computing system 240 may also monitor and/or collect network data 102 to generate combined or aggregated performance metrics and/or key performance indicators associated with cellular network 120.

Although in FIG. 2 network data 102 is described as being sent to computing system 240 in response to requests 101 initiated by computing system 240, in other examples, network data 102 may be sent to computing system 240 without first receiving a specific request 101. For example, service and management orchestrator 112, non-real-time RIC 122, and/or near-real-time RIC 124 may occasionally, periodically, or continually send at least some network data 102 to computing system 240, without first receiving a request 101 for such data. Similarly, radio access network 109, mobile core network 105, and/or elements or element management systems of cellular network 120 may occasionally, periodically, or continually send at least some network data 102 to computing system 240, without first receiving a request 101 for such data.

Computing system 240 may also collect metrics and events associated with local wireless network 130. For instance, continuing with the example being described in the context of FIG. 2, collection module 251 of computing system 240 causes communication unit 245 to output another set of one or more signals over network 115. One or more elements of local wireless network 130 receive a signal and determine that the signal corresponds to a requests 101, seeking information about performance metrics and/or key performance indicators associated with local wireless network 130.

For example, one or more access points 131 may receive a request 101 and respond by sending metrics, in the form of network data 103 (e.g., performance metrics or indicators collected by access point 131), over network 115. Communication unit 245 of computing system 240 detects a responsive signal over network 115 and outputs information about the responsive signal to collection module 251. Collection module 251 determines that the responsive signal corresponds to network data 103 from one or more of access points 131. Collection module 251 stores network data 103 from such access points 131 within data store 259.

Also, where local wireless network 130 includes a Wi-Fi manager 132, Wi-Fi manager 132 may also receive one or more requests 101 and respond by sending network data 103 over network 115. In such an example, collection module 251 receives network data 103 and determines that the network data 103 corresponds to network data 103 collected, obtained, or otherwise generated by Wi-Fi manager 132 or other elements of local wireless network 130 (e.g., network hardware within local wireless network 130 or one or more of network resources 136).

In some examples, network data 103 may include telemetry data and/or performance metrics and/or key performance indicators pertaining to local wireless network 130. Network data 103 may, for example, include sequential metrics such as aggregated transmission or reception of the flow of information per access point 131, aggregated transmission or reception of the flow of information per site or physical location across multiple access points 131, the transmission or reception of data per user device 104, information about the number of attached user devices 104 for each access point 131, logs, and/or other information and metrics. Computing system 240 may also monitor and/or collect network data 103 to generate combined or aggregated performance metrics and/or key performance indicators associated with local wireless network 130.

Also, although in FIG. 2 network data 103 is described as being sent to computing system 240 in response to requests 101 initiated by computing system 240 and sent to elements of local wireless network 130, in other examples, network data 103 may be sent to computing system 240 without first receiving a specific request 101. For example, one or more of access points 131 may occasionally, periodically, or continually send at least some network data 103 to computing system 240, without first receiving a request 101 for such data. Similarly, other elements of local wireless network 130, including Wi-Fi manager 132 or network resources 136, may occasionally, periodically, or continually send at least some network data 103 to computing system 240, without first receiving a request 101 for such data.

Computing system 240 may train one or more models 281 on information collected from cellular network 120 and/or local wireless network 130. For instance, again referring to the example being described within the context of FIG. 2, management module 252 of computing system 240 causes communication unit 245 to output a series of signals over network 115. Model development system 280 detects the signals and determines that the signals correspond to instructions and/or data for training various machine learning models (e.g., models 281). Model development system 280 further determines that the signals include data (or instructions for obtaining data) that can be used as training data for training models 281 to make predictions about joint operations of cellular networks 120 and local wireless network 130. Accordingly, such training data may be derived from both network data 102 (i.e., including metrics about cellular network 120) and network data 103 (i.e., including metrics about local wireless network 130).

Model development system 280 may train various models 281. For example, still with reference to FIG. 2, model development system 280 applies appropriate machine learning and/or artificial intelligence techniques to the training data. Such techniques may include performing supervised or unsupervised learning to develop models capable of making inferences based on joint sets of data corresponding to network data 102 and network data 103. In some examples, as described herein, model development system 280 may use data derived from operations by cellular network 120 and local wireless network 130 depicted in FIG. 2 in order to train such models 281. However, model development system 280 may alternatively, or in addition, rely on other appropriate training data, which may be derived from other networks (e.g., cellular networks, Wi-Fi networks) or any other networks, particularly those that involve overlapping coverage analogous to the overlapping networks illustrated in FIG. 2.

Model development system 280 may prepare models 281 for use in jointly managing operations of cellular network 120 and local wireless network 130. For instance, once models 281 are trained, model development system 280 outputs a series of signals over network 115. Communication unit 245 of computing system 240 detects the signals and outputs information about the signals to management module 252. Management module 252 determines that the signals correspond to a set of trained models 281 capable of generating inferences based on joint sets of network data 102 and network data 103. Management module 252 stores models 281 within storage device 250, and configures models 281 to generate inferences when prompted with production data (e.g., current network data 102 and network data 103) describing operations of cellular network 120 and local wireless network 130.

As described below, models 281 may be trained to generate inferences about joint operations and events occurring in cellular network 120 and/or local wireless network 130. Such models may pertain generally to network congestion, data usage anomalies, device attachment anomalies, energy savings opportunities, network misconfigurations, potential security threats, and network hardware maintenance.

For example, model development system 280 may train one or more models 281 to make inferences about congestion in cellular network 120 and/or local wireless network 130. To do so, model development system 280 may apply data-driven machine learning algorithms to analyze traffic patterns and quality of service metrics to identify existing congestion, or to predict congestion before it occurs on either cellular network 120 or local wireless network 130.

Model development system 280 may also train one or more models 281 to detect data usage anomalies or anomalies relating to patterns of traffic associated with user devices 104. For example, one or more of models 281 may evaluate current data usage patterns associated with user devices 104 and determine that such usage patterns are inconsistent with historical usage patterns. Such a determination may be made based on the total data throughput usually associated with a given user device 104 (or sets of user devices 104) that may be attached to either cellular network 120 or local wireless network 130. Specifically, one or more models 281 may correlate the number and/or type of user devices 104 attached to the networks and the total data throughput and identify whether traffic patterns are inconsistent with normal operations. Where traffic patterns appear anomalous, model 281 may predict that some of the user devices 104 are not operating properly (e.g., some of the user devices 104 might be able to attach to either cellular network 120 or local wireless network 130 but cannot access one or more internal/external applications).

Model development system 280 may also train one or more models 281 to detect anomalies relating to which network a given user device 104 is attaching. For example, one or more of models 281 may evaluate the times and days on which a given user device 104 attaches to either cellular network 120 or local wireless network 130. A model 281 may, for instance, be trained to understand that certain user devices 104 tend to be attached to one of the networks (i.e., cellular network 120 or local wireless network 130) at certain times during the day or week. If network attachment patterns for a given user device 104 are not consistent with normal patterns, then such a model 281 may infer that the user device 104 cannot access the network because of a problem. The model 281 may perform such monitoring at the level of the access points 131 for local wireless network 130 or at the cell level and/or the Radio Resource Control (RRC) level for issues related to radio access network 109 or at the non-access stratum (NAS) level for issues related to the mobile core network 105.

Model development system 280 may also train one or more models 281 to identify energy savings opportunities. For example, a model 281 may identify off-peak usage times during which energy savings might be gained by turning off one or more Wi-Fi access points 131, leaving some user devices 104 to rely on cellular radios with broader coverage. In other words, a model 281 may, based on observed traffic associated with user devices 104 and time of day, identify opportunities to disable Wi-Fi access points 131 that overlap with a cellular coverage area provided by cellular network 120. When the model 281 determines that observed traffic associated with the user devices 104 rises to normal levels, a model may enable Wi-Fi access points 131, or vice-versa.

Model development system 280 may train one or more models 281 to identify network misconfigurations. For example, one or more of models 281 may be trained to identify an incorrect maximum transmission unit (MTU) value for a user plane function (UPF). Model 281 may identify such misconfigurations by monitoring KPIs on the N3 interface (data plane connection between the RAN and the User Plane Function) and the N6 interface (connection point between a 5G network's User Plane Function and the broader internet), and determine when packet count spikes on N6 upstream compared to N3.

Model development system 280 may train one or more models 281 to identify anomalies that suggest security threats. For example, one or more of models 281 may detect unusual behaviors indicating security threats, such as attempted Distributed Denial of Service (DDoS) attacks or unauthorized network access attempts. Such a model 281 may be trained to learn normal traffic patterns and identify any significant deviations from those patterns. Once identified by such a model, actions could be taken (e.g., resolution module 254 of by computing system 240), which may include automated blocking measures or notifying security teams to mitigate risks.

Model development system 280 may also train one or more models to predict instances in which maintenance of network hardware may be required. For example, one or more of models 281 may be trained to monitor the operational health of network hardware, such as radios, and access points, to predict hardware failures. Through data analysis of temperature, memory usage, and historical maintenance logs, such a model 281 may be able to identify potential failures based on historical data and alerts. Once identified by such a model, preventive maintenance actions could be initiated (e.g., by resolution module 254 of computing system 240) for various network hardware (e.g., cellular radios and access points 131).

Computing system 240 may apply one or more of models 281 to manage operations in cellular network 120 and local wireless network 130. For instance, again referring to the example being described in the context of FIG. 2, collection module 251 monitors current operations taking place in cellular network 120 and local wireless network 130. Collection module 251 collects network data 102 from cellular network 120 and network data 103 from local wireless network 130, while user devices 104 are connected to either of cellular network 120 or local wireless network 130. Collection module 251 collects such data by receiving the data automatically, or in response to requests 101, as described above. Collection module 251 outputs information about the collected network data to management module 252. To associate the per device metrics coming from different networks, management module 252 correlates and/or maps device identifications under all the monitored networks (i.e., cellular network 120 and local wireless network 130 in this example). One implementation of device identification mapping may include SIM based EAP-AKA authentication for Wi-Fi users through a User Data Management (UDM) module of computing system 240 (e.g., included within functions performed by management module 252). The same UDM may also manage the authentication of the private cellular network so network specific device identification will be mapped for management module 252. Management module 252 applies one or more of models 281 trained to predict or identify various network conditions to the collected and mapped data. Management module 252 receives one or more predictions from a model 281 about conditions of cellular network 120 and local wireless network 130 (or about user devices 104 attached to such networks). In some examples, management module 252 outputs information about the predictions to user interface module 253, enabling generation of one or more user interfaces for presentation to a user. Management module 252 also outputs information about the predictions to resolution module 254. Resolution module 254 determines a mitigation strategy based on predictions made by model 281, and performs or proposes actions, as appropriate, to address any issues predicted by models 281.

In one example, computing system 240 may identify a condition relating to congestion occurring or expected to occur in cellular network 120 and/or local wireless network 130. For instance, management module 252 chooses and applies one or more models 281 trained to predict congestion based on collected and mapped data derived from current network data 102 and 103. Management module 252 receives information from models 281 identifying actual or expected congestion. Management module 252 outputs information about the actual or expected congestion to resolution module 254. Resolution module 254 determines a strategy for preventing and/or mitigating congestion, which may include directing traffic to optimal paths, dynamic resource allocation and handing over some of user devices 104 from cellular network 120 to local wireless network 130 (or from local wireless network 130 to cellular network 120, as appropriate). In some examples where congestion is occurring or expected, management module 252 and/or resolution module 254 monitors network data 102 and 103 and preemptively blocks certain users attaching to cellular network 120 or local wireless network 130 at certain times to prevent congestion or overload.

If resolution module 254 determines a mitigation strategy that involves moving some user devices 104 from one network to another, resolution module 254 may choose the user devices 104 to move on a random basis, or based on usage patterns of each user devices 104 (e.g., choosing to move higher usage user devices). However, choosing which of user devices 104 to move may also be performed based on classifications associated with each of user devices 104. For example, management module 252 of computing system 240 may classify each of user devices 104 as being either primarily configured for cellular access (e.g., cellular network 120) or primarily configured for Wi-Fi access (e.g., local wireless network 130). User devices 104 with such classifications may attach to their identified primary network in most cases, and might only be allowed to attach to a non-primary network if congestion or other issue is predicted on the primary network. Other classifications of user devices 104 that might affect remediation efforts may include Wi-Fi only (e.g., for devices having Wi-Fi capability but no cellular capability), 4G Cellular only (e.g., for devices only compatible with 4G cellular networks, and not having Wi-Fi capability), 5G Cellular only (e.g., for devices only compatible with 4G cellular networks, and not having Wi-Fi capability), Any Cellular (e.g., for devices having both 4G and 5G capability, but no Wi-Fi capability), or Wi-Fi and Cellular at the same time (Bonding/MPTCP).

In some examples, resolution module 254 may perform actions pursuant to a remediation strategy automatically. In other examples, resolution module 254 may cause user interface module 253 to report congestion and/or proposed mitigation strategies through a user interface presented at administrator device 260 (i.e., for review by administrator 261), and perform the actions pursuant to the remediation strategy after receiving authorization from the administrator 261.

In another example, computing system 240 may detect anomalies based on a comparison of network data 102 and 103 derived from current operations of networks 120 and 130 to historical network data from those networks. For instance, still with reference to FIG. 2, management module 252 chooses and applies one or more models 281 trained to identify anomalies (e.g., signifying data usage changes associated with user devices 104, unusual network attachment patterns for a user device 104, unusual behaviors associated with joint activity across networks 120 or 130, or activity suggesting a security threat). Management module 252 receives from models 281 information about predicted anomalies based on comparisons of current and historical data. Management module 252 outputs information about the predictions to resolution module 254. Resolution module 254 determines a strategy for mitigating, addressing, or remediating any predicted anomalies. Such mitigation strategies may include proposing or performing a change or repair to one or more user devices 104 or taking security precautions (e.g., applying automated blocking measures or notifying security teams to mitigate risks).

Modules illustrated in FIG. 2 (e.g., collection module 251. management module 252. user interface module 253, and resolution module 254) and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device.

Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may interact with and/or operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated.

Further, each module, data store, component, program, executable, data item, functional unit, or other item illustrated within a storage device may be implemented in various ways. For example, each module, data store, component, program, executable, data item, functional unit, or other item illustrated within a storage device may be implemented as a downloadable or pre-installed application or "app." In other examples, each module, data store, component, program, executable, data item, functional unit, or other item illustrated within a storage device may be implemented as part of an operating system executed on a computing device.

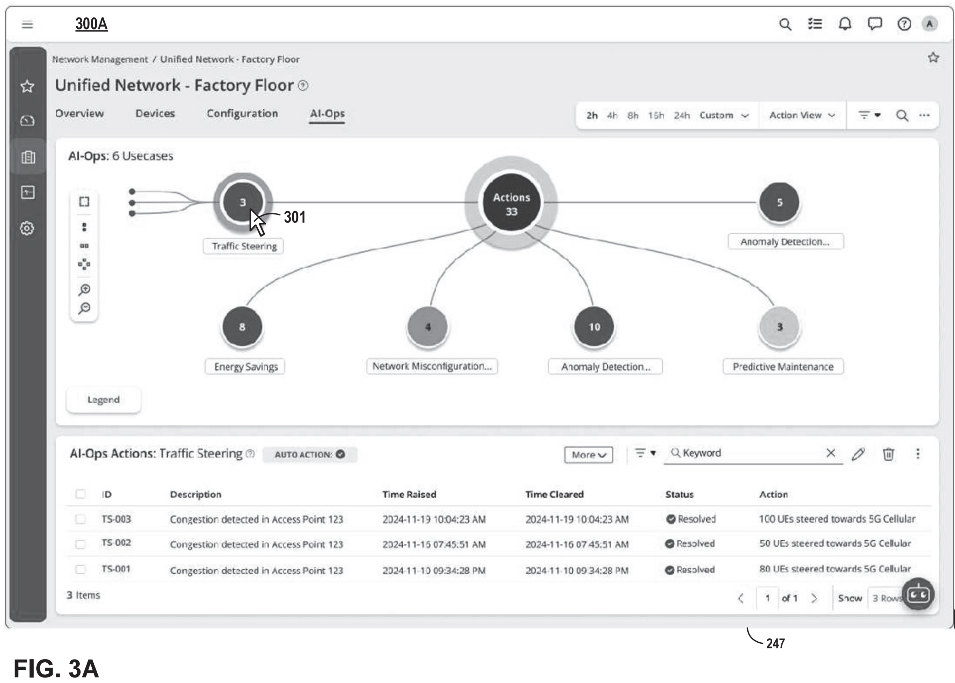

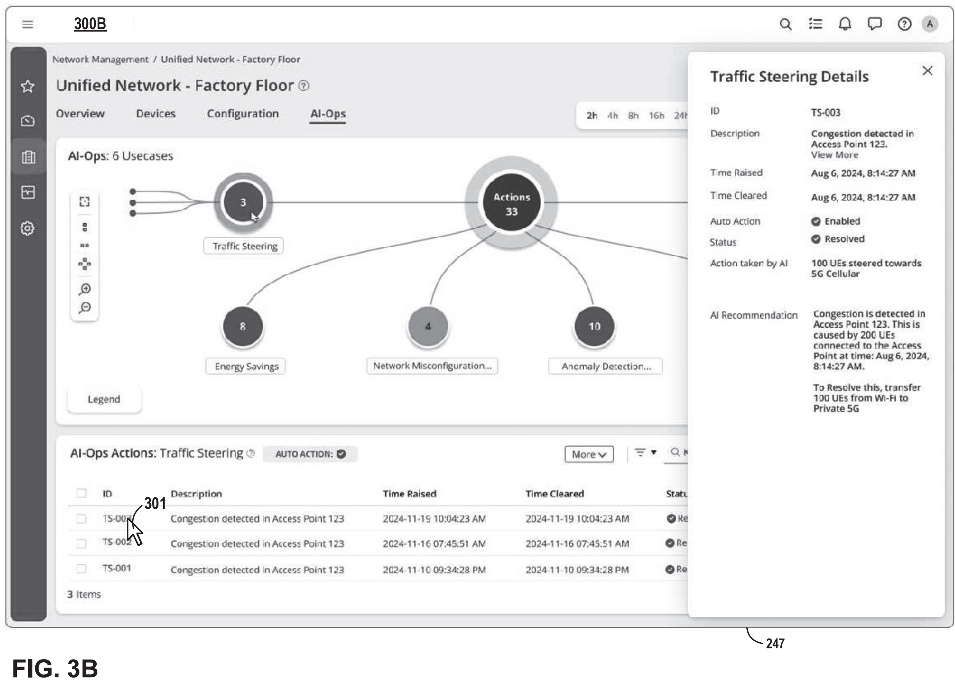

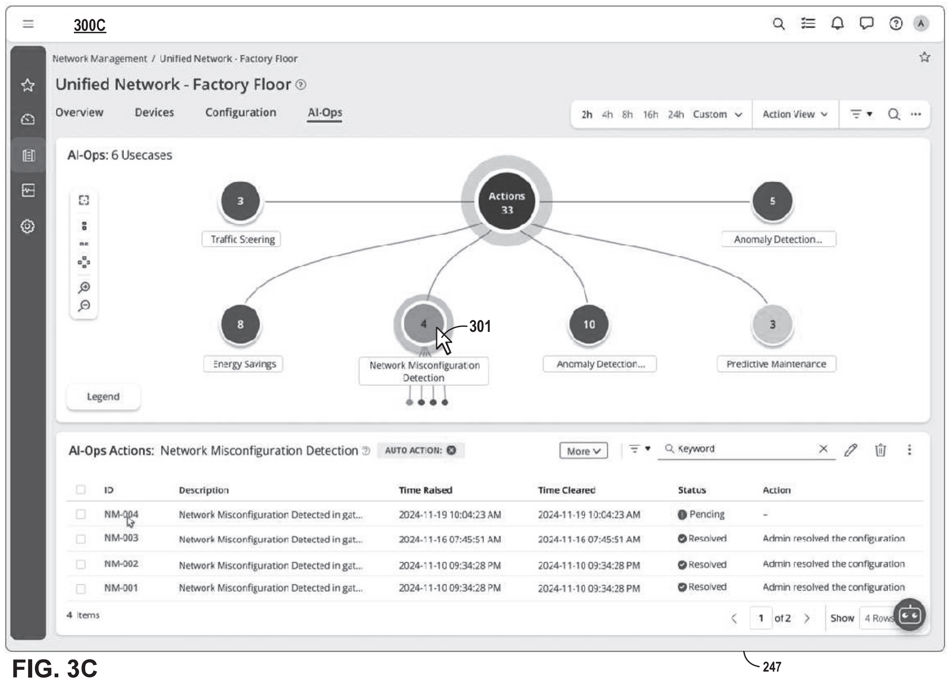

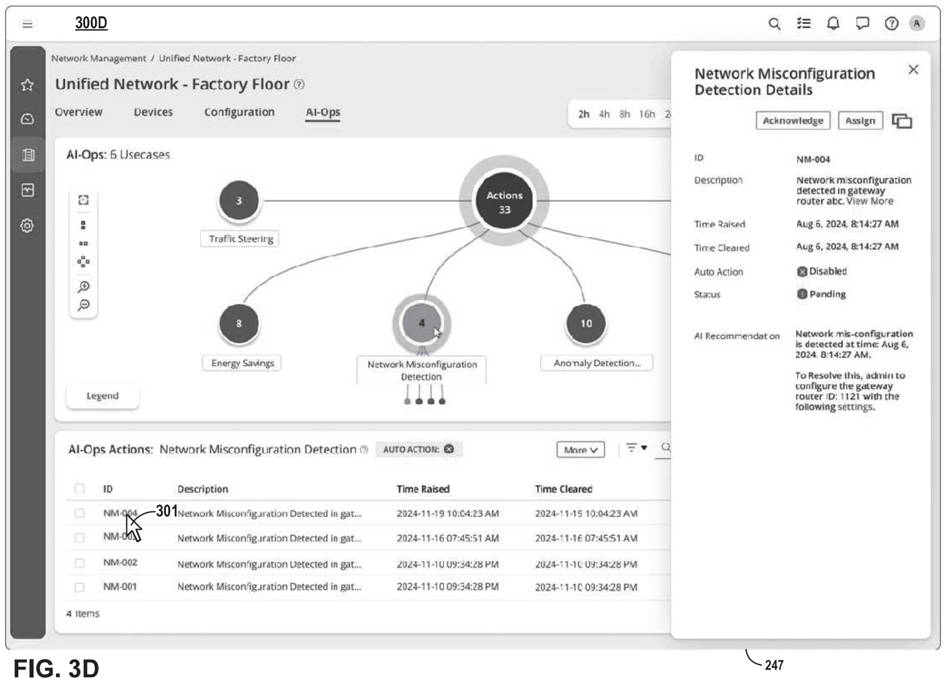

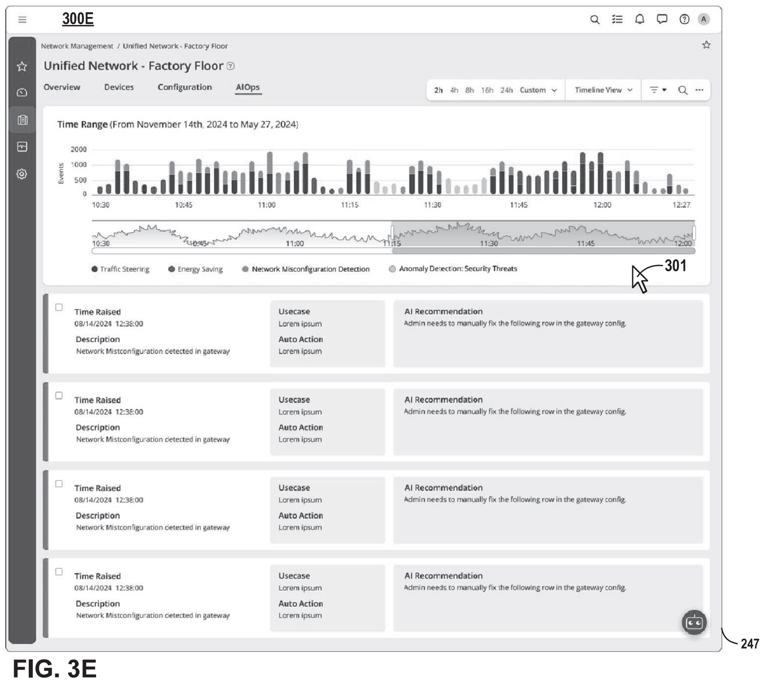

FIG. 3A, FIG. 3B, FIG. 3C, FIG. 3D, and FIG. 3E are conceptual diagrams illustrating example user interfaces presented by a user interface device in accordance with one or more aspects of the present disclosure. Each of the user interfaces 300 presented in FIG. 3A through FIG. 3E (i.e., user interfaces 300A, 300B, 300C, 300D, and 300E, respectively) may correspond to user interface 300 presented or output by joint operations manager 140 of FIG. 1. Each of user interface 300 may also be presented or output by computing system 240 of FIG. 2, and in such an example, any of user interfaces 300 may be presented by an output device, such as a display device included as part of computing system 240 of FIG. 2. Such a display device may be considered an example of output devices 247 illustrated in FIG. 2. In some examples, such as where the display device is a presence-sensitive display (e.g., a "touch screen"), the display device may also serve as an example of input device 246 illustrated in FIG. 2. One or more aspects of the user interfaces illustrated in FIG. 3A through FIG. 3E may be described herein within the context of computing system 240 of FIG. 2.

FIG. 3A is an example user interface providing a visualization of unified operations for various use cases associated with a system having multiple wireless networks (as in network system 100 of FIG. 1 or network system 200 of FIG. 2). Specifically, user interface 300A provides information about six use cases, each of which are presented as a display element radiating from a central "actions" display element in user interface 300A. The six use cases corresponding to the display elements include (in counterclockwise order starting from the left): (1) traffic steering (or congestion), indicating 3 artificial intelligence operations actions ("AI-Ops Actions"), (2) energy savings, indicating eight actions, (3) network misconfigurations, indicating 4 actions, (4) data usage anomaly detection, indicating 10 actions, (5) predictive maintenance, indicating 3 actions, and (6) user device attachment anomaly detection, indicating 5 actions.

Computing system 240 may present user interface 300A in response to input from an administrator (e.g., administrator 261 operating administrator device 260, which may be integrated into computing system 240). For instance, in an example that can be described in the context of FIG. 2 and FIG. 3A, input device 246 of computing system 240 detects input and outputs information about the input to user interface module 253 of computing system 240. User interface module 253 determines that the input corresponds to a request to present information unified network operations within network system 200. User interface module 253 collects information cellular network 120 and local wireless network 130 by accessing such information in data store 259 within storage device 250 of computing system 240. User interface module 253 generates data sufficient to render a user interface on display device, which may be one of the output devices 247 included within computing system 240. User interface module 253 uses the data to cause the display device to present user interface 300A as illustrated in FIG. 3A. In some examples, such as where administrator device 260 is not integrated into computing system 240, computing system 240 may output signals over network 115 that enable the user interface to be presented remotely (e.g., at a remote administrator device 260).

In FIG. 3A, a display device (e.g., one of output devices 247) presents user interface 300A, which includes the visualizations depicted within FIG. 3A. Once presented as illustrated in FIG. 3A, user interface 300A may respond to a selection of the traffic steering/congestion use case (e.g., by cursor 301) by presenting information about three "AI-Ops Actions" in a panel shown at the bottom of user interface 300A. This panel identifies each of the three AI-Ops Actions by ID, Description, Time Raised, Time Cleared, Status, and Action (proposed or performed automatically).

Computing system 240 may present further information about one or more of the illustrated "AI-Ops Actions." For instance, with reference to FIG. 2 and now FIG. 3B, user interface module 253 receives an indication of input associated with selection, by cursor 301, of the first AI-Ops Action near the bottom of 300B. In response, user interface module 253 generates user interface information associated with that specific AI-Ops Action, and causes output device 247 to present the information in a "Traffic Steering Details" panel on the right side of user interface 300B in FIG. 3B.

In a similar manner, computing system 240 may present information about a different use case. For instance, with reference to FIG. 2 and FIG. 3C, user interface module 253 receives an indication of input associated with selection, by cursor 301, of the "network misconfiguration detection" use case. In response, user interface module 253 updates user interface 300C (in FIG. 3C) to present information about four AI-Ops associated with that use case, as illustrated in a table within the bottom panel of user interface 300C of FIG. 3C. Note that the "AI-Ops Actions" table at the bottom of user interface 300C presents information about the four network misconfiguration actions. When user interface module 253 receives an indication of input corresponding to selection (e.g., by cursor 301) of any of the items in that table, user interface module 253 causes 300C to ube updated to user interface 300D as illustrated in FIG. 3D. In FIG. 3D, user interface 300D presents a "Network Misconfiguration Detection Details" panel along the right side of user interface 300D.

FIG. 3E illustrates presentation of user interface 300E, which provides information about the number of events associated with each of the six use cases in a stacked time-based chart (see the time-sequenced chart along the top of user interface 300E). Four events depicted in the time-sequenced chart along the top of user interface 300E are listed below the chart, with each event within its own panel in user interface 300E.

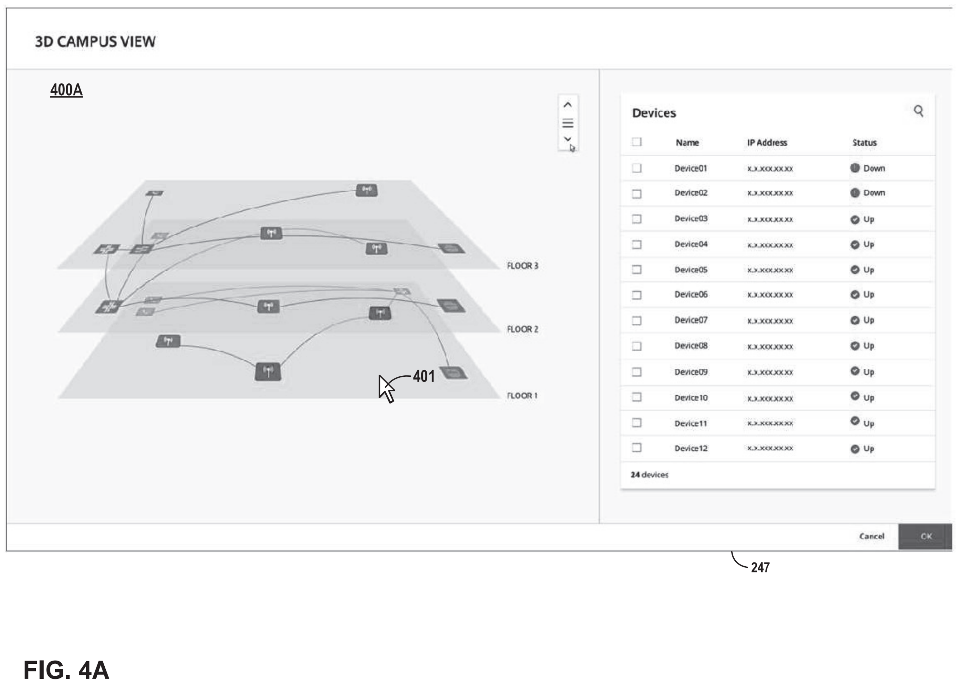

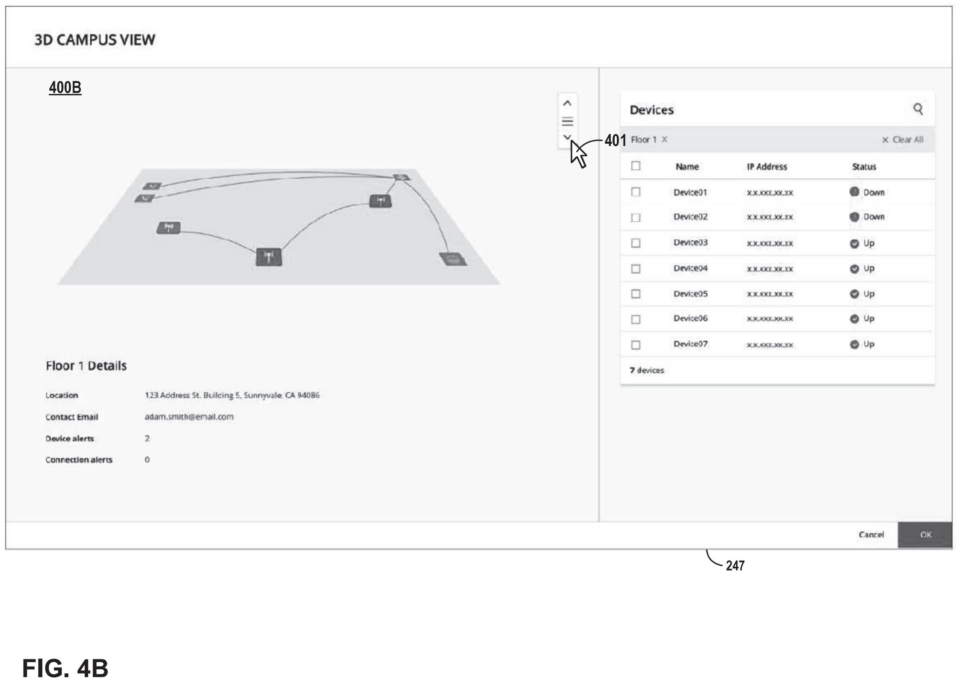

FIG. 4A and FIG. 4B are conceptual diagrams illustrating additional example user interfaces presented by a user interface device in accordance with one or more aspects of the present disclosure. Each of the user interfaces 400 presented in FIG. 4A and FIG. 4B (i.e., user interfaces 400A and 400B, respectively) may correspond to user interface 300 presented or output by joint operations manager 140 of FIG. 1 or user interface 300 illustrated in FIG. 2. Like user interfaces 300, any of user interfaces 400 may be presented by an output device of joint operations manager 140 or computing system 240 (e.g., e.g., display device 247 included as part of computing system 240 of FIG. 2).

FIG. 4A presents a three-dimensional campus view of network equipment, where the equipment may be any of the network devices included within radio access network 109 or mobile core network 105 of cellular network 120, or any of the access points 131 of local wireless network 130. A panel on the right side of user interface 400A lists devices depicted within user interface 400A and provides the name, IP Address, and Status of such devices.

FIG. 4B is an alternative view of one of the floors depicted in user interface 400A of FIG. 4A. User interface 400B of FIG. 4B may be presented by user interface module 253 of computing system 240 in response to detecting selection (e.g., by cursor 401) of an area of user interface 400A of FIG. 4A that corresponds to the first floor of the three-dimensional campus view presented in user interface 400A. In user interface 400B, the panel on the right side of user interface 400B lists devices found on the first floor, and provides the name, IP Address, and Status of such devices.

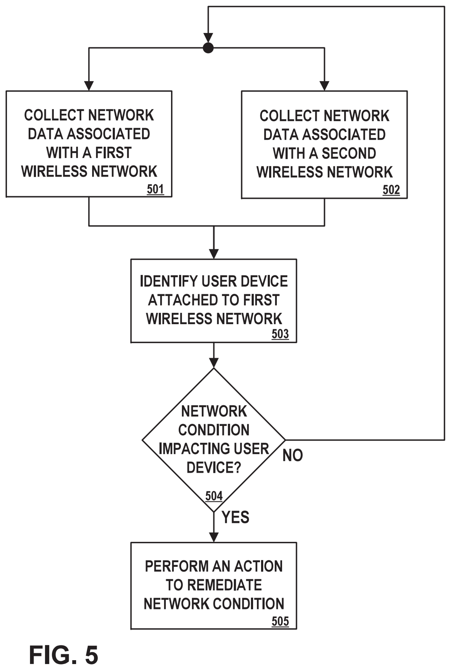

FIG. 5 is a flow diagram illustrating operations performed by an example joint operations manager, in accordance with one or more aspects of the present disclosure. FIG. 5 is described below within the context of network system 100 of FIG. 1. In other examples, operations described in FIG. 5 may be performed by one or more other components, modules, systems, or devices. Further, in other examples, operations described in connection with FIG. 5 may be merged, performed in a different sequence, omitted, or may encompass additional operations not specifically illustrated or described.

In the process illustrated in FIG. 5, and in accordance with one or more aspects of the present disclosure, joint operations manager 140 may collect network data associated with a first wireless network (501). For example, with reference to FIG. 1, joint operations manager 140 outputs a plurality of requests 101 over network 115 to cellular network 120. Elements within cellular network 120 detect a series of signals and determine that the signals include requests 101 seeking information about performance metrics, key performance indicators, and/or other information about cellular network 120. Devices and elements associated with cellular network 120 respond to the requests 101 by outputting network data 102, which is received by joint operations manager 140 over network 115. Through such a process, joint operations manager 140 may obtain metrics from a RAN intelligent controller (RIC) associated with cellular network 120 (e.g., see FIG. 2), from cellular network 120 directly, from element management systems that manage the switches within cellular network 120, or from other elements of cellular network 120. In some examples, joint operations manager 140 may receive network data 102 (e.g., metrics and/or other information about cellular network 120) without making a specific request for the information.

Joint operations manager 140 may collect network data associated with a second wireless network (502). For example, again with reference to FIG. 1, joint operations manager 140 outputs a plurality of requests 101 over network 115 to local wireless network 130. Elements within local wireless network 130 detect a series of signals, determine that the signals include requests 101 seeking information about local wireless network 130 (e.g., performance metrics, key performance indicators, and/or other information). Devices and elements associated with local wireless network 130 (e.g., access points 131, network resources 136, Wi-Fi manager 132, or other elements within local wireless network 130) respond to the requests 101 by outputting network data 103 over network 115 to joint operations manager 140. As with cellular network 120, joint operations manager 140 may, in some examples, receive the network data (e.g., metrics and/or other information about local wireless network 130) without making a specific request for the information.

Joint operations manager 140 may identify a user device that is attached to the first wireless network (503). For example, with reference to FIG. 1, joint operations manager 140 evaluates network data 102 and 103 received from cellular network 120 and local wireless network 130. Joint operations manager 140 identifies one or more user devices 104 that are attached to cellular network 120 and are not attached to local wireless network 130, but have the capability of attaching to local wireless network 130. Joint operations manager 140 determines whether the one or more user devices 104 are within a wireless coverage area served by both cellular network 120 and local wireless network 130.

Joint operations manager 140 may identify or predict a network condition impacting the user device (504). For example, in FIG. 1, joint operations manager 140 further evaluates network data 102 and 103 and determines that there are no network conditions that affect the user devices 104 attached to cellular network 120 (NO path from 504). However, in at least some examples, joint operations manager 140 determines, based on network data 102 and 103, that congestion is affecting user devices 104 attached to cellular network 120 (YES path from 504).

Joint operations manager 140 may perform, based on the predicted network condition impacting the user device, an action to remediate the network condition impacting the user device (505). For example, once again referring to FIG. 1, joint operations manager 140 evaluates options for remediating congestion within cellular network 120, which may include potential traffic steering operations among cellular network 120 and local wireless network 130. Joint operations manager 140 determines that local wireless network 130 is not congested. Joint operations manager 140 elects to move one or more user devices 104 that are attached to cellular network 120 to local wireless network 130 in order to mitigate the congestion at cellular network 120. Joint operations manager 140 chooses the user devices 104 to move based on whether such devices are capable of attaching to local wireless network 130. Joint operations manager 140 may also choose the user devices 104 to move based further on the data usage or other characteristics of such user devices 104.

Joint operations manager 140 takes action to move the user devices 104 from cellular network 120 to local wireless network 130. To do so, joint operations manager 140 may send control signals to cellular network 120 or elements within cellular network 120, instructing each of such elements to modify its operation to cause specific user devices 104 to detach from cellular network 120. Joint operations manager 140 may also send control signals to local wireless network 130 or elements within local wireless network 130, instructing each of the elements to modify its operation to enable those user devices 104 to attach to local wireless network 130. Accordingly, joint operations manager 140 sends control signals to, for example, hardware elements within cellular network 120 and/or 130, instructing effectively controlling those elements to achieve the desired remediation. Accordingly, joint operations manager 140 controls, based on predictions made by models employed by joint operations manager 140, the operation of systems, elements, or hardware within cellular network 120 and/or local wireless network 130.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

In the preceding description, references may be occasionally made to "some examples." In this disclosure, a reference to "some examples" is intended to mean a subset of all of the possible examples supported by this disclosure. Also, different references to "some examples" are not always a reference to the same subset of examples.

Some examples may be used in conjunction with devices and/or networks operating in accordance with existing Wireless-Gigabit-Alliance (WGA) specifications (Wireless Gigabit Alliance, Inc. WiGig MAC and PHY Specification Version 1.1, April 2011, Final specification) and/or future versions and/or derivatives thereof, devices and/or networks operating in accordance with existing IEEE 802.11 standards (IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012; IEEE802.11ac-2013 ("IEEE P802.11ac-2013, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 4: Enhancements for Very High Throughput for Operation in Bands below 6GHz", December, 2013); IEEE 802.11ad ("IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60 GHz Band", 28 December, 2012); IEEE-802.11REVmc ("IEEE 802.11-REVmcTM/D3.0, June 2014 draft standard for Information technology - Telecommunications and information exchange between systems Local and metropolitan area networks Specific requirements; Part 11: Wireless LAN Medium Access Control (MAC) and Physical Layer (PHY) Specification"); IEEE802.11-ay (P802.11ay Standard for Information Technology--Telecommunications and Information Exchange Between Systems Local and Metropolitan Area Networks--Specific Requirements Part 11: Wireless LAN Medium Access Control (MAC) and Physical Layer (PHY) Specifications--Amendment: Enhanced Throughput for Operation in License-Exempt Bands Above 45 GHz)), IEEE 802.11-2016 and/or future versions and/or derivatives thereof, devices and/or networks operating in accordance with existing Wireless Fidelity (Wi-Fi) Alliance (WFA) Peer-to-Peer (P2P) specifications (Wi-Fi P2P technical specification, version 1.5, August 2014) and/or future versions and/or derivatives thereof, devices and/or networks operating in accordance with existing cellular specifications and/or protocols, e.g., 3rd Generation Partnership Project (3GPP), 3GPP Long Term Evolution (LTE) and/or future versions and/or derivatives thereof, units and/or devices which are part of the above networks, or operate using any one or more of the above protocols, and the like.

Some examples may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some examples may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), MultiUser MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth , Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE advanced, Enhanced Data rates for GSM Evolution (EDGE), or the like. Other examples may be used in various other devices, systems and/or networks.

Some demonstrative examples may be used in conjunction with a WLAN (Wireless Local Area Network), e.g., a Wi-Fi network. Other examples may be used in conjunction with any other suitable wireless communication network, for example, a wireless area network, a "piconet", a WPAN, a WVAN, and the like.

Some examples may be used in conjunction with a wireless communication network communicating over a frequency band of 2.4Ghz, 5 GHz and/or 60 GHz. However, other examples may be implemented utilizing any other suitable wireless communication frequency band(s), for example, an Extremely High Frequency (EHF) band (the millimeter wave (mmWave) frequency band), e.g., a frequency band within the frequency band of between 20GhH and 300GHz, a WLAN frequency band, a WPAN frequency band, a frequency band according to the WGA specification, and the like.

While the above provides just some simple examples of the various device configurations, it is to be appreciated that numerous variations and permutations are possible. Moreover, the technology is not limited to any specific channels, but is generally applicable to any frequency range(s)/channel(s). Moreover, and as discussed, the technology may be useful in the unlicensed spectrum.

The disclosures of all publications, patents, and patent applications referred to herein are hereby incorporated by reference. To the extent that any material that is incorporated by reference conflicts with the present disclosure, the present disclosure shall control.

For ease of illustration, only a limited number of devices (e.g., user devices 104, access points 131, base stations 106, non-real-time RICs 122, near-real-time RICs 124, service and management orchestrators 112, joint operations manager 140, computing system 240, as well as others) are shown within the illustrations referenced herein. However, techniques in accordance with one or more aspects of the present disclosure may be performed with many more of such systems, components, devices, modules, and/or other items, and collective references to such systems, components, devices, modules, and/or other items may represent any number of such systems, components, devices, modules, and/or other items.

Thus, from one perspective, there have now been described techniques for managing multiple wireless networks providing overlapping coverage to user devices. In one example, this disclosure describes a computing system configured to collect network data associated with a first wireless network; collect network data associated with a second wireless network, wherein the first wireless network and the second wireless network have an overlapping coverage area, and wherein the first wireless network and the second wireless network are different wireless network types; identify, based on the network data associated with the first wireless network, a user device that is attached to the first wireless network and is in the overlapping coverage area, wherein the user device is also capable of attaching to the second wireless network; and predict, based on both the network data associated with the first wireless network and the network data associated with the second wireless network, a network condition impacting the user device.

The illustrations included herein depict at least one example implementation of an aspect of this disclosure. The scope of this disclosure is not, however, limited to such implementations. Accordingly, other example or alternative implementations of systems, methods or techniques described herein, beyond those illustrated, may be appropriate in other instances. Such implementations may include a subset of the devices and/or components included in the illustrations and/or may include additional devices and/or components not specifically illustrated.

The detailed description set forth above is intended as a description of various configurations and is not intended to represent the only configurations in which the concepts described herein may be practiced. The detailed description includes specific details for the purpose of providing a sufficient understanding of the various concepts. However, these concepts may be practiced without these specific details. In some instances, well-known structures and components are shown in block diagram form in the referenced illustrations in order to avoid obscuring such concepts.

Accordingly, although one or more implementations of various systems, devices, and/or components may be described with reference to specific illustrations, such systems, devices, and/or components may be implemented in a number of different ways. For instance, one or more devices illustrated herein as separate devices may alternatively be implemented as a single device; one or more components illustrated as separate components may alternatively be implemented as a single component. Also, in some examples, one or more devices illustrated herein as a single device may alternatively be implemented as multiple devices; one or more components illustrated as a single component may alternatively be implemented as multiple components. Each of such multiple devices and/or components may be directly coupled via wired or wireless communication and/or remotely coupled via one or more networks. Also, one or more devices or components that may be illustrated herein may alternatively be implemented as part of another device or component not shown in such illustrations. In this and other ways, some of the functions described herein may be performed via distributed processing by two or more devices or components.

Further, certain operations, techniques, features, and/or functions may be described herein as being performed by specific components, devices, and/or modules. In other examples, such operations, techniques, features, and/or functions may be performed by different components, devices, or modules. Accordingly, some operations, techniques, features, and/or functions that may be described herein as being attributed to one or more components, devices, or modules may, in other examples, be attributed to other components, devices, and/or modules, even if not specifically described herein in such a manner. References herein to "real time" or equivalent phrases are intended to encompass near-real time or seemingly near-real time, such as from the perspective of a reasonable human observer

Although specific advantages have been identified in connection with descriptions of some examples, various other examples may include some, none, or all of the enumerated advantages. Other advantages, technical or otherwise, may become apparent to one of ordinary skill in the art from the present disclosure. Further, although specific examples have been disclosed herein, aspects of this disclosure may be implemented using any number of techniques, whether currently known or not, and accordingly, the present disclosure is not limited to the examples specifically described and/or illustrated in this disclosure.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, or optical disk storage, magnetic disk storage, or other magnetic storage devices, flash memory, or any other medium that can be used to store desired program code in the form of instructions or data structures and that can be accessed by a computer. Also, any connection may properly be termed a computer-readable medium. For example, if instructions are transmitted from a website, server, or other remote source using a wired (e.g., coaxial cable, fiber optic cable, twisted pair) or wireless (e.g., infrared, radio, and microwave) connection, then the wired or wireless connection is included in the definition of medium. It should be understood, however, that computer-readable storage media and data storage media do not include connections, carrier waves, signals, or other transient media, but are instead directed to non-transient, tangible storage media.

Instructions may be executed by one or more processors, such as one or more digital signal processors (DSPs), general purpose microprocessors, graphics processing units (GPUs), application specific integrated circuits (ASICs), field programmable logic arrays (FPGAs), quantum processors, or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including, to the extent appropriate, a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Further examples of feature combinations taught by the present disclosure are set out in the following numbered clauses:
1. A method comprising:
   collecting, by a computing system, network data associated with a first wireless network;
   collecting, by the computing system, network data associated with a second wireless network, wherein the first wireless network and the second wireless network have an overlapping coverage area, and wherein the first wireless network and the second wireless network are different wireless network types;
   identifying, by the computing system and based on the network data associated with the first wireless network, a user device that is attached to the first wireless network and is in the overlapping coverage area, wherein the user device is also capable of attaching to the second wireless network;
   predicting, by the computing system and based on both the network data associated with the first wireless network and the network data associated with the second wireless network, a network condition impacting the user device; and
   performing, by the computing system and based on the predicted network condition impacting the user device, an action to remediate the network condition impacting the user device.
2. The method of clause 1, wherein the first wireless network is a cellular network and wherein the second wireless network is a Wi-Fi wireless network, and wherein predicting the network condition includes:
   predicting the network condition before it occurs.
3. The method of clause 1 or clause 2, wherein the first wireless network is a Wi-Fi wireless network; and wherein the second wireless network is a cellular network, and wherein predicting the network condition includes:
   predicting that the network condition has occurred.
4. The method of any preceding clause, wherein predicting the network condition includes:
   predicting network congestion in the first wireless network and a lack of network congestion in the second wireless network.
5. The method of clause 4, wherein performing the action to remediate the network congestion in the first wireless network includes:
   causing the user device to disconnect from the first wireless network; and
   enabling the user device to attach to the second wireless network.
6. The method of clause 5, further comprising:
   monitoring, by the computing system, the experience of the user device over a time frame in which the user device is attached to the first wireless network and then attached to the second wireless network.
7. The method of any preceding clause,
   wherein predicting the network condition includes predicting a data usage anomaly associated with the user device; and
   wherein performing the action to remediate the network condition includes making a configuration change to the user device.
8. The method of any preceding clause,
   wherein predicting the network condition includes predicting a network attachment anomaly associated with the user device; and
   wherein performing the action to remediate the network condition includes making a configuration change to the user device.
9. The method of any preceding clause, wherein predicting the network condition includes:
   outputting a user interface providing information about the network condition impacting the user device.
10. The method of any preceding clause, wherein performing the action to remediate the network condition includes:
   performing the action automatically.
11. The method of any preceding clause, wherein performing the action to remediate the network condition includes:
   performing the action in response to input authorizing the action.
12. The method of any preceding clause, wherein the user device is a first user device, and wherein the method further comprises:
   identifying, by the computing system and based on the network data associated with the second wireless network, a second user device that is attached to the second wireless network and is in the overlapping coverage area; and
   predicting, by the computing system and based on both the network data associated with the first wireless network and network data associated with the second wireless network, a network condition impacting the second user device.
13. The method of clause 12, further comprising:
   performing, by the computing system and based on the predicted network condition impacting the second user device, an action to remediate the network condition impacting the second user device.
14. A computing system comprising processing circuitry and a storage device, wherein the processing circuitry has access to the storage device and is configured to:
   collect network data associated with a first wireless network;
   collect network data associated with a second wireless network, wherein the first wireless network and the second wireless network have an overlapping coverage area, and wherein the first wireless network and the second wireless network are different wireless network types;
   identify, based on the network data associated with the first wireless network, a user device that is attached to the first wireless network and is in the overlapping coverage area, wherein the user device is also capable of attaching to the second wireless network;
   predict, based on both the network data associated with the first wireless network and the network data associated with the second wireless network, a network condition impacting the user device; and
   perform, based on the predicted network condition impacting the user device, an action to remediate the network condition impacting the user device.
15. The computing system of clause 14, wherein the first wireless network is a cellular network and wherein the second wireless network is a Wi-Fi wireless network, and wherein to predict the network condition, the processing circuitry is further configured to:
   predict the network condition before it occurs.
16. The computing system of clause 14 or clause 15, wherein the first wireless network is a Wi-Fi wireless network; and wherein the second wireless network is a cellular network, and wherein to predict the network condition, the processing circuitry is further configured to:
   predict that the network condition has occurred.
17. The computing system of any of clauses 14 to 16, wherein to predict the network condition, the processing circuitry is further configured to:
   predict network congestion in the first wireless network and a lack of network congestion in the second wireless network.
18. The computing system of clause 16 or clause 17, wherein to perform the action to remediate the network congestion in the first wireless network, the processing circuitry is further configured to:
   cause the user device to disconnect from the first wireless network and attach to the second wireless network.
19. The computing system of any of clauses 14 to 18,
   wherein to predict the network condition, the processing circuitry is further configured to predict a network attachment anomaly associated with the user device; and
   wherein to perform the action to remediate the network condition, the processing circuitry is further configured to make a configuration change to the user device.
20. Computer-readable media encoding instructions that, when executed, cause processing circuitry of a computing system to:
   collect network data associated with a first wireless network;
   collect network data associated with a second wireless network, wherein the first wireless network and the second wireless network have an overlapping coverage area, and wherein the first wireless network and the second wireless network are different wireless network types;
   identify, based on the network data associated with the first wireless network, a user device that is attached to the first wireless network and is in the overlapping coverage area, wherein the user device is also capable of attaching to the second wireless network;
   predict, based on both the network data associated with the first wireless network and the network data associated with the second wireless network, a network condition impacting the user device; and
   perform, based on the predicted network condition impacting the user device, an action to remediate the network condition impacting the user device.

## Claims

1. A method comprising:
collecting, by a computing system, network data associated with a first wireless network;
collecting, by the computing system, network data associated with a second wireless network, wherein the first wireless network and the second wireless network have an overlapping coverage area, and wherein the first wireless network and the second wireless network are different wireless network types;
identifying, by the computing system and based on the network data associated with the first wireless network, a user device that is attached to the first wireless network and is in the overlapping coverage area, wherein the user device is also capable of attaching to the second wireless network;
predicting, by the computing system and based on both the network data associated with the first wireless network and the network data associated with the second wireless network, a network condition impacting the user device; and
performing, by the computing system and based on the predicted network condition impacting the user device, an action to remediate the network condition impacting the user device.

2. The method of claim 1, wherein the first wireless network is a cellular network and wherein the second wireless network is a Wi-Fi wireless network, and wherein predicting the network condition includes:
predicting the network condition before it occurs.

3. The method of claim 1, wherein the first wireless network is a Wi-Fi wireless network; and wherein the second wireless network is a cellular network, and wherein predicting the network condition includes:
predicting that the network condition has occurred.

4. The method of claim 1, wherein predicting the network condition includes:
predicting network congestion in the first wireless network and a lack of network congestion in the second wireless network.

5. The method of any of claims 1-4, wherein performing the action to remediate the network congestion in the first wireless network includes:
causing the user device to disconnect from the first wireless network; and
enabling the user device to attach to the second wireless network.

6. The method of claim 5, further comprising:
monitoring, by the computing system, the experience of the user device over a time frame in which the user device is attached to the first wireless network and then attached to the second wireless network.

7. The method of any of claims 1-6,
wherein predicting the network condition includes predicting a data usage anomaly associated with the user device; and
wherein performing the action to remediate the network condition includes making a configuration change to the user device.

8. The method of any of claims 1-6,
wherein predicting the network condition includes predicting a network attachment anomaly associated with the user device; and
wherein performing the action to remediate the network condition includes making a configuration change to the user device.

9. The method of any of claims 1-6, wherein predicting the network condition includes:
outputting a user interface providing information about the network condition impacting the user device.

10. The method of any of claims 1-6, wherein performing the action to remediate the network condition includes:
performing the action automatically.

11. The method of any of claims 1-6, wherein performing the action to remediate the network condition includes:
performing the action in response to input authorizing the action.

12. The method of any of claims 1-6, wherein the user device is a first user device, and wherein the method further comprises:
identifying, by the computing system and based on the network data associated with the second wireless network, a second user device that is attached to the second wireless network and is in the overlapping coverage area; and
predicting, by the computing system and based on both the network data associated with the first wireless network and network data associated with the second wireless network, a network condition impacting the second user device.

13. A computing system comprising processing circuitry and a storage device, wherein the processing circuitry has access to the storage device and is configured to:
collect network data associated with a first wireless network;
collect network data associated with a second wireless network, wherein the first wireless network and the second wireless network have an overlapping coverage area, and wherein the first wireless network and the second wireless network are different wireless network types;
identify, based on the network data associated with the first wireless network, a user device that is attached to the first wireless network and is in the overlapping coverage area, wherein the user device is also capable of attaching to the second wireless network;
predict, based on both the network data associated with the first wireless network and the network data associated with the second wireless network, a network condition impacting the user device; and
perform, based on the predicted network condition impacting the user device, an action to remediate the network condition impacting the user device.

14. The system of claim 13, wherein the processing circuitry is configured to perform the steps recited in any of claims 2-12.

15. Computer-readable media encoding instructions that, when executed, cause one or more processors of a system to perform the method of any of claims 1-12.
